(19) Europäisches Patentamt
European Patent Office
Office européen des brevets

(11) **EP 3 425 386 B1**

(12) **EUROPEAN PATENT SPECIFICATION**

(45) Date of publication and mention
of the grant of the patent:
**13.04.2022 Bulletin 2022/15**

(21) Application number: **17180388.5**

(22) Date of filing: **07.07.2017**

(51) International Patent Classification (IPC):
**G01N 30/46** (2006.01)　　**G01N 30/72** (2006.01)
**G01N 30/84** (2006.01)

(52) Cooperative Patent Classification (CPC):
**G01N 30/7233; G01N 30/462; G01N 30/84**

(54) **ONLINE APPARATUS FOR IN-DEPTH CHARACTERIZATION OF ANTIBODY DRUG CONJUGATES**

ONLINE-VORRICHTUNG ZUR TIEFENCHARAKTERISIERUNG VON ANTIKÖRPER-WIRKSTOFF-KONJUGATEN

APPAREIL EN LIGNE POUR LA CARACTÉRISATION EN PROFONDEUR DE CONJUGUÉS ANTICORPS-MÉDICAMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2019 Bulletin 2019/02**

(73) Proprietors:
- **Université de Strasbourg
67000 Strasbourg (FR)**
- **UNIVERSITE CLAUDE BERNARD - LYON 1
69622 Villeurbanne Cédex (FR)**
- **Ecole Normale Supérieure de Lyon
69342 Lyon Cedex 07 (FR)**
- **Centre National de la Recherche Scientifique (CNRS)
75016 Paris (FR)**

(72) Inventors:
- **CIANFERANI, Sarah
67120 SOULTZ LES BAINS (FR)**
- **HEINISCH, Sabine
69100 VILLEURBANNE (FR)**
- **ROUVIERE, Florent
69200 VENISSIEUX (FR)**
- **GUILLARME, Davy
74100 Vetraz-Monthoux (FR)**

(74) Representative: **Plasseraud IP
66, rue de la Chaussée d'Antin
75440 Paris Cedex 09 (FR)**

(56) References cited:
- **DWIGHT R. STOLL ET AL: "Direct Identification of Rituximab Main Isoforms and Subunit Analysis by Online Selective Comprehensive Two-Dimensional Liquid Chromatography-Mass Spectrometry", ANALYTICAL CHEMISTRY, vol. 87, no. 16, 6 July 2015 (2015-07-06), pages 8307-8315, XP055413704, US ISSN: 0003-2700, DOI: 10.1021/acs.analchem.5b01578**
- **MORGAN SARRUT ET AL: "Analysis of antibody-drug conjugates by comprehensive on-line two-dimensional hydrophobic interaction chromatography x reversed phase liquid chromatography hyphenated to high resolution mass spectrometry. I - Optimization of separation conditions", JOURNAL OF CHROMATOGRAPHY B: BIOMEDICAL SCIENCES & APPLICATIONS., vol. 1032, 28 June 2016 (2016-06-28), pages 103-111, XP055414404, NL ISSN: 1570-0232, DOI: 10.1016/j.jchromb.2016.06.048**
- **MELISSA ALVAREZ ET AL: "On-line characterization of monoclonal antibody variants by liquid chromatographymass spectrometry operating in a two-dimensional format", ANALYTICAL BIOCHEMISTRY, ELSEVIER, AMSTERDAM, NL, vol. 419, no. 1, 27 July 2011 (2011-07-27) , pages 17-25, XP028391216, ISSN: 0003-2697, DOI: 10.1016/J.AB.2011.07.033 [retrieved on 2011-08-02]**

# EP 3 425 386 B1

## Description

### Field of the invention

The present invention relates to the characterization of proteins such as antibody drug conjugates, in particular to an apparatus and a method for characterization of proteins.

### Background

Monoclonal antibodies and their related compounds make up the largest class in human therapeutics to treat various diseases. The success of monoclonal antibodies stems from their high specificity and affinity, long circulating half-lives, ability to induce immune cell effector response, and structural versatility. However, canonical monoclonal antibodies often show a limited efficacy or face resistance, so several families of either armed antibodies, called Antibody Drug Conjugates (ADCs), or bispecific monoclonal antibodies have been developed to overcome these limitations. ADCs are tripartite molecules consisting of a monoclonal antibody onto which highly cytotoxic small molecules are conjugated by cleavable or non-cleavable linkers. They show better efficiency than canonical unconjugated monoclonal antibodies, due to the synergic effect of monoclonal antibody specificity for its target and the efficacy of the highly cytotoxic drug.

Many of these new monoclonal antibody formats, including ADCs, have emerged from a better understanding of structure-function relationships, which have mainly been achieved thanks to state-of-the art mass spectrometry and chromatographic methods. Indeed, ADCs are more complex than monoclonal antibodies, because of the increased inherent micro-variability imparted by the presence of the heterogeneous drug conjugates. Several recent papers have extensively reviewed the advantages, drawbacks and complementarity of such approaches. The analytical characterization of monoclonal antibody-related compounds usually follows a multilevel workflow, where biopharmaceuticals are studied at the intact protein level (top level), after enzymatic digestion into smaller monoclonal antibody sub-domains (middle-up level), or after proteolytic digestion to generate peptides (bottom-up level). To reduce the micro-heterogeneity of the monoclonal antibodies, middle- and bottom-up levels require preliminary treatment that can affect the quality of the final product (increased deamidation, oxidation, generation of aggregates, etc.). Top level methods performed on intact monoclonal antibodies require less handling and are thus of utmost interest, even though still in their infancy.

The development and optimization of ADCs rely on improving their analytical and bioanalytical characterization by assessing several critical quality attributes, namely the distribution and position of the cytotoxic drug, the amount of naked antibody, the average Drug to Antibody Ratio (DAR) and the residual drug-linker and related product proportions. The average DAR represents the amount of payloads that can be delivered to the tumor cell and thus is directly linked to the toxicity and the safety of the ADC. The distribution of drug-loads (*i.e.* the fraction of antibodies containing zero, one, two, three, *n* drugs) is also an important characteristic, since the different isoforms may have different toxicological and pharmacological properties.

As conjugation technologies may result in a highly heterogeneous ADC product, with respect to the loading of cytotoxic drug species, their position on the monoclonal antibody and the cleavability of the linker, there is no generic method allowing a complete ADC analytical characterization. The classical denaturing Reverse Phase Liquid Chromatography (RPLC) - Mass Spectrometry methods fail for characterization of cysteine ADCs, due to the harsh mobile phase conditions employed (acidic pH, high proportion of organic solvent, elevated mobile phase temperature), which disrupt the noncovalent associations between ADC sub-domains. The benchmark methods to characterize drug-load distribution and assess average DAR on ADCs are based on non-denaturing chromatography, and particularly Hydrophobic Interaction Chromatography (HIC) for cysteine ADCs or Ion Exchange Chromatography (IEX) for lysine ADCs. However, HIC or IEX, that would both separate individual species and preserve the structure of the ADC, are not directly connectable to online MS detection.

Up to now, two unsatisfactory approaches were suggested to link HIC with non-denaturing MS. The first approach consists in a time consuming off-line coupling performed by peaks collection, manual desalting of the fractions and subsequent non-denaturing MS or Ion-Mobility spectrometry-Mass Spectrometry (IM-MS) analysis. The second approach was recently proposed and is based on the online combination of HIC and, using either fully comprehensive or heart-cutting 2D-Liquid Chromatography (2D-LC) strategies. The online addition of a RPLC step allows i) the elimination of the non-volatile salts contained in the HIC mobile phase and ii) the improvement of the resolving power due to the additional chromatographic dimension. However, the cysteine linked ADC are denatured by the harsh RPLC conditions, leading to an indirect and more difficult characterization of the complex ADC.

Prior art: MORGAN SARRUT ET AL: "Analysis of antibody-drug conjugates by comprehensive on-line two-dimensional hydrophobic interaction chromatography x reversed phase liquid chromatography hyphenated to high resolution mass spectrometry. I - Optimization of separation conditions", JOURNAL OF CHROMATOGRAPHY B: BIOMEDICAL SCIENCES & APPLICATIONS, vol. 1032, 28 June 2016, pages 103-111, XP055414404.

A robust, highly powerful, non-time consuming and non-denaturing analytical methods to answer ADCs re-

2

quirements is thus required.

The Applicant surprisingly developed an apparatus meeting these requirements. This apparatus is based on the direct connection between non-denaturing chromatography and non-denaturing MS.

According to a first aspect of the invention, there is provided a method for in-depth characterization of molecules comprising the following steps:

a) providing a solution of molecules;

b) loading the solution onto a separative chromatography column;

c) recovering a flow-through sample comprising separated molecules;

d) loading the flow-through sample comprising separated molecules recovered during step c) onto a desalting chromatography column to carry out a chromatographic method under non-denaturing conditions,

e) recovering a desalted flow-through sample comprising separated molecules;

f) loading the desalted flow-through sample comprising separated molecules recovered during step e) onto a mass spectrometer,

g) performing a non-denaturing mass spectrometry analysis to determine interacting stoichiometries and elucidating higher order structure of molecules,

wherein the molecules are proteins, and

wherein the separated molecules are recovered according to a specific sequence during step c) and are loaded during step d), recovered during step e) and loaded during step f) according to the same specific sequence.

According to a second aspect of the invention, there is provided an apparatus adapted to carry out said method. comprising:

- a first housing having an inlet and an outlet and adapted to receive a separative chromatography column,

- a second housing having an inlet and an outlet and adapted to receive a desalting chromatography column adapted to carry out a chromatographic method under non-denaturing conditions, and

- a mass spectrometer having an inlet and an outlet,

wherein the inlet and the outlet of the first housing are fluidly connected respectively to the inlet and the outlet of said separative chromatography column,

wherein the inlet and the outlet of the second housing are fluidly connected respectively to the inlet and the outlet of said desalting chromatography column,

wherein the outlet of the first housing is fluidly connected to the inlet of the second housing and the outlet of the second housing is fluidly connected to the inlet of the mass spectrometer.

**Brief description of the figures**

Further objectives, features and advantages of the present invention will become apparent upon reading the following description with reference to the illustrative and non-limiting drawings, amongst which:

Figure 1 is an illustration of the apparatus of the present invention.

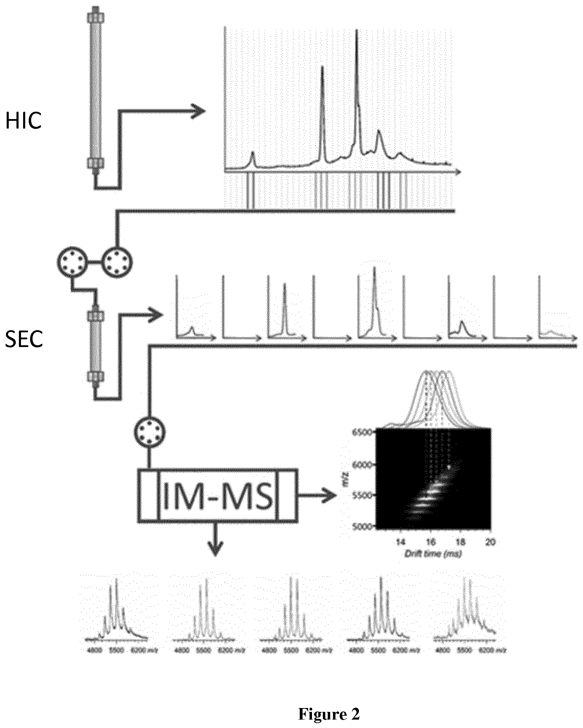

Figure 2 represents the effect of injection volume on the SEC separation of brentuximab vedotin and ammonium acetate.

Figure 3 is a flowchart of the HICxSEC-IMxMS analysis of brentuximab vedotin performed with the apparatus of the present invention.

Figure 4 is the online HICxSEC-IMxMS analysis of brentuximab vedotin.

Figure 5 is the 2D-HICxSEC contour plots of brentuximab vedotin with and without thermal stress and corresponding IM-MS structural characterization of odd DAR species of stressed and not stressed brentuximab vedotin.

## Detailed description of the invention

Apparatus

According to a first aspect, the invention is an apparatus for in-depth characterization of molecules comprising:

- a first housing **1** having an inlet and an outlet and adapted to receive a separative chromatography column,
- a second housing **2** having an inlet and an outlet and adapted to receive a desalting chromatography column, and
- a mass spectrometer **3** having an inlet and an outlet,

wherein the inlet and the outlet of the first housing **1** are adapted to be fluidly connected respectively to the inlet and the outlet of said separative chromatography column,

wherein the inlet and the outlet of the second housing **2** are adapted to be fluidly connected respectively to the inlet and the outlet of said desalting chromatography column,
characterized in that
the outlet of the first housing **1** is fluidly connected to the inlet of the second housing **2** and the outlet of the second housing **2** is fluidly connected to the inlet of the mass spectrometer **3**.

In the present application "molecules" refers to non-aggregated molecules or aggregates of molecules. Typically the molecules may be large molecules such as proteins, in particular monoclonal antibody-related compounds like Antibody Drug Conjugates (ADCs), bispecific antibodies, antibody-dual-drug conjugates and protein complexes (protein/protein, protein/DNA, protein/RNA).

In the present application "separative chromatography column" refers to a column of chromatography loaded with a stationary phase adapted to carry out an on-line chromatographic method under non-denaturing conditions to separate totally or partially molecules of a solution from each other.

In the present application "desalting chromatography column" refers to a column of chromatography adapted to carry out a chromatographic method under non-denaturing condition to decrease the concentration of salt in a solution or change the nature of the salt of a solution.

Typically the separative chromatography column may be an hydrophobic interaction chromatography column (hereinafter referred to as HIC column) or a size exclusion chromatography column (hereinafter referred to as SEC column) or an ion exchange chromatography column (hereinafter referred to as IEX column).

Typically the desalting chromatography column may be a SEC column.

In the present application "HIC column" refers to a column of chromatography adapted to carry out a Hydrophobic Interaction Chromatography (hereinafter referred to as HIC), *i.e.* a chromatographic method in which molecules are separated on the basis of their hydrophobicity. In particular the stationary phase of the HIC column is substituted with a limited number of hydrophobic groups and the separation of the molecules is based on the interaction between these hydrophobic groups and said molecules.

Advantageously HIC enables the separation of ADCs on the basis of the increased hydrophobicity imparted to said ADCs by the increased number of drug conjugates while preserving the structure of said ADCs. HIC thus enables the determination of the average Drug to Antibody Ratio (average DAR) of the ADCs and the relative proportion of the different drug loads.

In the present application "SEC column" refers to a column of chromatography for carrying out a Size Exclusion Chromatography (hereinafter referred to as SEC), *i.e.* a chromatographic method in which molecules are separated by their size and not by another separation parameter such as molecular weight or polarity. In particular the pores of the stationary phase of the SEC column may trap the molecules based on their size thereby separating said molecules.

Advantageously SEC preserves the structure of the proteins, in particular ADCs. According to the invention, SEC may be used for fast separation of molecules from salts thanks to differences in hydrodynamic volumes.

In the present application "mass spectrometer" refers to an apparatus adapted for carrying out mass spectrometry (hereinafter referred to as MS) under non-denaturing conditions, *i.e.* an analytical method used to measure the mass to charge ratio of charged molecules.

According to the invention, thanks to accurate mass measurement, non-denaturing MS may be used for providing a wealth of information on the biochemical and biophysical properties of proteins, in particular ADCs, therapeutic proteins, membrane proteins and protein complexes such as protein/protein, protein/DNA, protein/RNA, protein/small molecule,. More particularly, non-denaturing MS may be used for determining interacting stoichiometries and elucidating higher order structure of proteins, in particular ADCs, therapeutic proteins, membrane proteins and protein complexes such as protein/protein, protein/DNA, protein/RNA, protein/small molecule.

Typically MS may be electrospray ionization-mass spectrometry (hereinafter referred to as ESI-MS), or electrospray ionization-ion-mobility spectrometry-mass spectrometry (hereinafter referred to as IM-MS).

In the present application "ESI-MS" refers to a method wherein mass spectrometry is coupled to electrospray ionization. According to this method the mass spectrometer **3** comprises an ESI source applying a high voltage to a liquid to create the electrospray. ESI is especially useful in producing ions from proteins, because it overcomes the propensity of these molecules to fragment when ionized.

In the present application "IM-MS" refers to an analytical method wherein gas phase ions are first separated on a millisecond timescale using ion-mobility spectrometry and wherein the components of said gas phase ions are identified using non-denaturing mass spectrometry analysis on a microsecond timescale. The IM-MS analysis is particularly adapted to the analysis of complex mixtures of molecules based on differing mobilities in an electric field. To carry out the IM-MS analysis, the mass spectrometer **3** is coupled to an ion-mobility separator.

Typically IM-MS analysis may be applied to large molecules such as proteins, in particular ADCs, therapeutic proteins, membrane proteins and protein complexes such as protein/protein, protein/DNA, protein/RNA, protein/small molecule. Advantageously IM-MS analysis may be used to identify the proteins, in particular ADCs, therapeutic proteins, membrane proteins and protein complexes such protein/protein, protein/DNA, protein/RNA, protein/small molecule, separated by the HIC column, the IEX column or the SEC column of the first housing **1** and the SEC column of the second housing **2**. IM-MS analysis may also be carried out to determine the conformational homogeneity/heterogeneity of proteins, in particular ADCs, therapeutic proteins, membrane proteins and protein complexes such as protein/protein, protein/DNA, protein/RNA, protein/small molecule.

In the present application "under non-denaturing conditions" refers to conditions where proteins, (e.g., antibodies) do not lose their secondary, tertiary or quaternary structures and to conditions wherein protein complexes do not lose their interactions. Non-denaturing conditions differs from the denaturing conditions, said denaturing conditions include high temperatures causing thermal unfolding (e.g., 50°C or greater) or extreme pH (for example, below pH 5 and above pH 8), and organic solvent.

Typically the molecules to be characterized by the apparatus of the present invention are first added to a solution, in particular an aqueous solution, to obtain a solution of molecules. This solution is then loaded onto the separative chromatography column of the first housing 1 so as to separate the molecules and to recover a flow-through sample from the outlet of the first housing **1**.

To promote the separation of the molecules by the stationary phase of the separative chromatography column, the solution typically comprises a separation salt such as non-volatile salt, a buffer salt or mixture thereof. The sample may thus comprise the separated molecules and the separation salt.

Typically the non-volatile salt may be potassium thiocyanate, sodium chloride, potassium chloride, ammonium chloride, sodium sulfate, potassium sulfate and ammonium sulfate or mixture thereof, in particular the non-volatile salt may be sodium chloride or ammonium acetate or mixture thereof.

Typically the buffer salt may be phosphate buffer, such as $Na_2HPO_4$ or $Na_2HPO_4$ and $NaH_2PO_4$.

The separation salt is adapted to the separative chromatography column, however it may contaminate the mass spectrometer **3**. Therefore the outlet of the first housing **1** cannot be directly fluidly connected to the inlet of the mass spectrometer **3**.

Unexpectedly, the Applicant has found that the desalting chromatography column of the second housing **2** between the separative chromatography column and the mass spectrometer **3** to carry out an on-line chromatographic method advantageously prevents the contamination of the mass spectrometer **3** by the separation salt.

According to the invention, the sample is loaded onto the desalting chromatography column so as to desalt the sample and to recover a desalted flow-through sample (hereinafter referred to as desalted sample) from the outlet of the second housing **2**. The desalted sample comprises the separated molecules and a mass spectrometer compatible salt. The desalted sample can then be loaded onto the mass spectrometer **3** to characterize the molecules.

In the present application, "a mass spectrometer compatible salt" refers to a salt which is compatible for use with a mass spectrometer or with a concentration in the desalted sample so low that the desalted sample is compatible for use with a mass spectrometer in non-denaturing conditions.

Typically a salt which is compatible for use with a mass spectrometer may be formic acid, acetic acid, trifluoroacetic acid.

Typically the concentration of salt in the desalted sample may be below 100mMol/l.

The apparatus of the present invention enables an in-depth characterization of molecules without a slow, manual and thus non-reproducible desalting step between the separative chromatography column and the mass spectrometer **3**. Therefore a fast, automated and reproducible in-depth characterization of molecules can be performed by the apparatus of the present invention.

According to one embodiment, the apparatus of the present invention further comprises a detector **10**, **20** at the outlet of the first housing **1** and/or at the outlet of the second housing **2**.

In the present application "a detector" refers to a device adapted to the characterization of the separated molecules by the detection of chromatographic peak characteristic of each separated molecule. Typically the detector may be a wavelength UV detector, in particular a single wavelength UV detector, a diode array UV detector or fluorescence detector.

If the separative chromatography column is a HIC column, then the detector **10** at the outlet of the first housing **1** may be a wavelength UV detector, in particular a single wavelength UV detector, or a diode array UV detector.

The wavelength UV detector or diode array UV detector are adapted to detect the chromatographic peak characteristic of the separated molecules of the sample so as to determine the relative intensities of the drug load peaks in a quantitative manner and the average DAR of ADCs by HIC.

If the separative chromatography column is a SEC column, then the detector **10** at the outlet of the first housing **1** may be a wavelength UV detector, in particular a single wavelength UV detector or a diode array UV detector.

According to one embodiment, the detector **20** at the outlet of the second housing **2** is a wavelength UV detector, in particular a single wavelength UV detector, or a diode array UV detector.

The UV detector is adapted to detect the chromatographic peak characteristic of the molecular weight of the separated molecules, the separation salt and the mass spectrometer compatible salt. The detection of the chromatographic peaks by the wavelength UV detector or a diode array UV detector enables the determination of the mass of the separated molecules by SEC.

Advantageously, the apparatus of the present invention allows recovering the separated molecules from the outlet of the first housing **1** according to a specific sequence, and loading them onto the desalting chromatography column, recovering them from the outlet of the second housing **2**, and loading them onto the mass spectrometer **3** according to the same specific sequence.

Therefore the characterizations of the separated molecules performed by the detector **10** and/or the detector **20**, and the mass spectrometer **3** can be easily and precisely correlated.

Advantageously the apparatus of the present invention is particularly adapted to the non-denaturing in-depth characterization of molecules such as proteins, in particular ADCs, monoclonal antibodies, therapeutic proteins, protein complexes (protein/protein, protein/DNA, protein/RNA, protein/small molecule).

According to the embodiment wherein the separative chromatography column is a HIC column, then the apparatus of the present invention is advantageously adapted to determine the average DAR of ADCs by HIC and correlate said DAR to the mass of ADCs elucidated by MS or to the conformational homogeneity of ADCs determined by IM-MS analysis.

According to the embodiment wherein the separative chromatography column is a SEC column, then the apparatus of the present invention is advantageously adapted to determine the molecular weight of the ADCs and its aggregates by SEC and correlate said molecular weight to the primary structure of ADCs elucidated by MS or to the conformational homogeneity of ADCs determined by IM-MS analysis.

Typically the stationary phase of the HIC column may be silica particles functionalized with short alkyl amide groups, Fractogel EMD propyl (Merck), Fractrogel EMD phenyl (Merck Millipore), Butyl-S sepharose (GE Healthcare), Octyl Sepharose (GE Healthcare), Capto Octyl (GE Healthcare), Capto Butyl (GE Healthcare), Capto Phenyl ImpRes (GE Healthcare), Capto Butyl ImpRes (GE Healthcare), Toyopearl PPG-600M (Tosoh Bioscience), Toyopearl Hexyl-650 (Tosoh Bioscience), Toyopearl Butyl-650 (Tosoh Bioscience), Toyopearl Phenyl-650 (Tosoh Bioscience), Toyopearl Ether-650 (Tosoh Bioscience), Macroprep t-Butyl (Bio-Rad), Macroprep phenyl (Bio-Rad), Cellufine Butyl (JNC Corporation), Cellufine Phenyl (JNC Corporation) or Poros HP2 (Applied Biosystems), Mabpac HIC-10 (Thermo), Propac HIC-10 (Thermo), Mabpac HIC-20 (Thermo) Mabpac HIC-Butyl (Thermo), Protein-pak Hi Res HIC (Waters), TSKgel Ether-5PW (Tosoh), in particular the stationary phase of the HIC column may be silica particles functionalized with short alkyl amide groups.

If the stationary phase of the HIC column is silica particles functionalized with alkyl amide groups, then the size of the silica particles is from 1 $\mu$m to 20 $\mu$m, in particular from 2.5 $\mu$m to 10 $\mu$m, more particularly is 5 $\mu$m. Moreover, the pore size of the silica particles is from 10 nm to 1000 nm, in particular from 50 nm to 500 nm, more particularly is 100 nm.

According to one embodiment, the length of the HIC column is from 5 mm to 500 mm, in particular from 50 mm to 300 mm, more particularly is 100 mm.

According to one embodiment, the diameter of the HIC column is from 1 mm to 10 mm, in particular from 2.5 mm to 7.5 mm, more particularly is from 4.5 mm to 5 mm.

According to one embodiment, the maximum inlet pressure of the HIC column is from 200 bar to 1000 bar, in particular from 300 bar to 750 bar, more particularly is from 400 bar to 575 bar.

According to one embodiment, the volume of the HIC column is from 50 $\mu$l to 5000 $\mu$l, in particular from 200 $\mu$l to 2000 $\mu$l, more particularly from 500 $\mu$l to 1500 $\mu$l.

According to a specific embodiment, the HIC column is the MAbPac HIC-10 LC Column (ThermoFisher).

Typically, the stationary phase of the SEC column is selected from polymer coated silica particles, crosslinked polystyrene, acrylic, hydroxylated acrylic, acrylic, agarose, or a polyhydroxyethyl- aspartamide backbone, in particular the stationary phase of the SEC column is polymer coated silica particles.

If the stationary phase of the SEC column is polymer coated silica particles, then the size of the silica particles

is from 1 μm to 10 μm, in particular from 1.5 μm to 5 μm, more particularly from 2 μm to 3 μm. Moreover, the pore size of the silica particles is from 10 nm to 1000 nm, in particular from 50 nm to 500 nm, more particularly is from 100 nm to 350 nm.

According to one embodiment, the volume of the SEC column is from 30 μl to 3000 μl, in particular from 100 μl to 1000 μl, more particularly from 200 μl to 700 μl.

According to one embodiment, the length of the SEC column is from 5 mm to 500 mm, in particular from 10 mm to 250 mm, more particularly is 50 mm to 150 mm.

According to one embodiment, the diameter of the SEC column is from 1 mm to 10 mm, in particular from 2.5 mm to 7.5 mm, more particularly is from 4 mm to 5 mm.

According to one embodiment, the maximum inlet pressure of the SEC column is from 50 bar to 1000 bar, in particular from 300 bar to 750 bar, more particularly is from 350 bar to 425 bar.

Advantageously, employing the SEC column, having a length in the above mentioned ranges, at a flow rate corresponding to the maximum recommended inlet pressure enable a very fast separation in the SEC column.

According to one specific embodiment, the SEC column is the AdvanceBio SEC (Agilent Technologies).

According to one embodiment, the apparatus of the present invention further comprises a first valve **6** and a second valve **7**, said first valve **6** comprising an inlet, a first outlet and a second outlet, and said second valve **7** comprising a first inlet, a second inlet and an outlet, wherein:

- the inlet of the first valve **6** is fluidly connected to the outlet of the first housing **1**,
- the outlet of the second valve **7** is fluidly connected to the inlet of the second housing **2**,
- the first outlet of the first valve **6** is fluidly connected to the first inlet of the second valve **7**, and
- the second outlet of the first valve **6** is fluidly connected to the second inlet of the second valve **7**.

In the present application, "valve" refers to a device with a moveable mean that opens and closes a passageway in order to allow, prevent or control the flow of a fluid. In particular the valve may be a two-position switching valve.

According to one embodiment, the first valve **6** and the second valve **7** may be a multi-way valve, in particular a multi-way valve comprising 2 to 10 ways, more particularly a multi-way valve comprising 3, 4, 5, 6, 7, 8 and 9 ways, even more particularly a 6-ways valve. The skilled person will know how to determine the number of ways of the first valve **6** and the second valve **7**.

According to one embodiment, the apparatus of the present invention further comprises at least two flow-regulating lines **8** and **9**, each flow-regulating lines **8** and **9** fluidly connecting the outlets of the first valve **6** to the inlets of the second valve **7**.

According to one specific embodiment, the number of flow-regulating lines **8** and **9** is 2 to 50, in particular 2 to 10, more particularly is 2. The skilled person will know how to determine the number of number of flow-regulating lines **8** and **9**.

According to one embodiment, the volume of each flow-regulating line **8** and **9** is from 10 μl to 1000 μl, in particular from 50 μl to 500 μl, more particularly from 150 μl to 250 μl. The skilled person will know how to determine the volume of each flow-regulating line **8** and **9**.

Advantageously the first valve **6**, the second valve **7** and the flow-regulating lines **8** and **9** defines a flow-regulating zone wherein fractions of the sample recovered from the first housing **1** are kept so as to regulate the loading of said fractions onto the desalting chromatography column.

For example, a first fraction of the sample is recovered from the first housing **1** and diverted by the first valve **6** toward one flow-regulating line **8** to fill the volume of said flow-regulating line **8**. When the volume of this flow-regulating line **8** is full or after a predetermined time, this first fraction of the sample is diverted by the second valve **7** toward the desalting chromatography column, and a second fraction of the sample is diverted by the first valve **6** toward another flow-regulating line **9** to fill the volume of said another flow-regulating line **9**. When the volume of this another flow-regulating line **9** is full or after a predetermined time, the second fraction of the sample is diverted by the second valve **7** toward the desalting chromatography column. This sequence may be repeated as long as the sample is recovered from the outlet of the first housing **1**.

Advantageously the flow-regulating zone avoids the mixing of the each fractions sample into the desalting chromatography column, thereby avoiding the mixing of the separated molecules comprised in said fractions into the desalting chromatography column.

The flow-regulating zone thus enables to recover the separated molecules from the outlet of the first housing **1** according to a specific sequence, and then to load them onto the desalting chromatography column, to recover them from the outlet of the second housing **2**, and to load them onto the mass spectrometer **3** according to the same specific sequence.

Advantageously, the flow-regulating zone enables the easily and precise correlation between the characterizations of the separated molecules performed by the detector **10** and/or the detector **20**, and the mass spectrometer **3**.

The flow-regulating zone also facilitates the desalting of each fractions of sample in the desalting chromatography column.

According to one specific embodiment, one outlet of the second valve **7** is fluidly connected to a waste device **11** adapted to recover the separation salt.

According to a very specific embodiment, the first valve **6** is a 6-ways valve and comprises a first and a second inlets and a first and a second outlets, the second valve **7** is a 6-ways valve and comprises a first and a second inlets and a first and a second outlets, and

- the first inlet of the first valve **6** is fluidly connected to the outlet of the first housing **1**,
- a first flow-regulating line **8** fluidly connects the first outlet of the first valve **6** to the first inlet of the second valve **7**,
- the first outlet of the second valve **7** is fluidly connected to the waste device **11** adapted to recover the separation salt,
- a second flow-regulating line **9** fluidly connects the second outlet of the second valve **7** to the second inlet of the first valve **6**, and
- the second outlet of the first valve **6** is fluidly connected to the inlet of the second housing **2**.

According to a very specific embodiment, the apparatus of the present invention further comprises a multi-way valve, such as multi-way valve comprising 8, 10 or 12 ways, said multi-way valve comprising a first inlet, a second inlet and a third inlet, a first outlet, a second outlet and a third outlet, wherein:

- the first inlet is fluidly connected to the outlet of the first housing **1**,
- the first outlet is fluidly connected to the inlet of the second housing **2**,
- the second inlet is fluidly connected to the second outlet, and
- the third inlet is fluidly connected to the third outlet.

Typically the second inlet is fluidly connected to the second outlet through a first loop line, and the third inlet is fluidly connected to the third outlet through a second loop line.

Typically the volume of each loop line is from 10 $\mu$l to 100 $\mu$l, in particular from 50 $\mu$l to 500 $\mu$l, more particularly from 150 $\mu$l to 250 $\mu$l. The skilled person will know how to determine the volume of each loop line.

According to one embodiment, the apparatus of the present invention further comprises a third valve **12** comprising one or more inlets and two or more outlets, wherein one inlet of the third valve **12** is fluidly connected to the outlet of the second housing **2** and one outlet of the third valve **12** is fluidly connected to the inlet of the mass spectrometer **3**. One outlet of the third valve **12** may also be fluidly connected to a recovering device **13** adapted to recover the separation salt.

According to one embodiment, the third valve **12** is a multi-way valve, in particular a multi-way valve comprising 2 to 10 ways, more particularly 3, 4, 5, 6, 7, 8 and 9 ways.

Advantageously the third valve **12** may only divert towards the mass spectrometer **3** the separated molecules or the separated aggregates thereby preventing the contamination of the mass spectrometer **3** with the separation salt.

To insure a flow of fluid in the separative chromatography column and the desalting chromatography column, the apparatus of the present invention may comprise at least one pump and a programmable controller electrically connected to the at least one pump and adapted to control the at least one pump.

According to one embodiment, the at least one pump is a first pump **4** fluidly connected to the first housing **1** and/or a second pump **5** fluidly connected to the second housing **2**.

According to this embodiment, the first pump **4** is fluidly connected to the inlet or the outlet of the first housing **1** and is adapted to insure a flow of a fluid in the separative chromatography column.

In the present application "fluid" refers to a liquid mobile phase such as the solution comprising the molecules to be characterized, the flow-through sample or an eluent. Typically the eluent may be a pure solvent or a mixture of solvents, it may comprise salt such as the buffer salt or the mass spectrometer compatible salt.

According to this embodiment, the second pump **5** is fluidly connected to the inlet or the outlet of the second housing **2** and is adapted to insure a flow of fluid in the desalting chromatography column.

According to a specific embodiment, the second pump **5** is fluidly connected to one inlet of the second valve **7** so that the second pump **5** is indirectly fluidly connected to the inlet of the second housing **2**.

The programmable controller may control the pump flow of the at least one pump.

The programmable controller may also be electrically connected to the first valve **6**, the second valve **7**, the multi-ways valve and/or the third valve **12** and adapted to control valve switching of said first valve **6**, said second valve **7**, the multi-ways valve and/or said third valve **12** to insure a flow of fluid in the separative chromatography column and the desalting chromatography column, to regulate the flow of fluid in the flow-regulating lines **8** and **9**, and to load the flow of fluid onto the mass spectrometer **3**.

According to this specific embodiment, the detector **20** may be adapted to emit a signal to the programmable controller when the separation is detected so that the programmable controller may control the third valve **12** to load the separated molecules onto the mass spectrometer **3** and to divert the separation salt to the recovering device **13**. Advantageously, the detector **20** may thus avoid the contamination of the mass spectrometer **3** by the separation salt, in particular the mass spectrometer **3** comprising an ESI source.

Method

Another aspect of the invention is a method for in-depth characterization of molecules comprising the following steps:

a) providing a solution of molecules;
b) loading the solution onto a separative chromatography column;
c) recovering a flow-through sample comprising separated molecules;
d) loading the flow-through sample comprising separated molecules recovered during step c) onto a desalting chromatography column,
e) recovering a desalted flow-through sample comprising separated molecules;
f) loading the desalted flow-through sample comprising separated molecules recovered during step e) onto a mass spectrometer,
g) performing a non-denaturing mass spectrometry analysis,

wherein the separated molecules are recovered according to a specific sequence during step c) and are loaded during step d), recovered during step e) and loaded during step f) according to the same specific sequence.

The molecules, the separative chromatography column, the desalting chromatography column, the flow-through sample, the desalted flow-through sample and the mass spectrometer are as defined or described in the section related to the apparatus.

Typically the solution of molecules provided at step a) may be an aqueous solution obtained by adding separation salt to an aqueous solution comprising molecules to be separated from each other and to be characterized.

The separation salt, the non-volatile salt and the buffer salt are as defined or described in the section related to the apparatus.

Typically the concentration of non-volatile salt in the solution of molecules is 0.01 mol/l to 10 mol/l, in particular 0.05 mol/l to 5 mol/l, more particularly is 2.5 mol/l.

Typically a solution comprising the buffer salt (hereinafter referred to as buffer solution) is added to the solution of molecules.

Typically the buffer solution may be buffered to a pH of 4 to 10, more preferably of 5 to 9, most preferably of 6.5 to 7.5.

Typically the pH of the buffer solution may be adjusted with phosphoric acid, sodium hydroxide solution, acetic acid or liquid ammonia.

The concentration of buffer salt in the solution of molecules depends on the separative chromatography column used.

If the separative chromatography column is a SEC column, the concentration of SEC buffer in the solution of molecules is 1 mmol/l to 500 mmol/l, in particular 50 mmol/l to 250 mmol/l, more particularly 90 mmol/l to 110 mmol/l.

If the separative chromatography column is a HIC column, the concentration of buffer in the solution of molecules may 10 mmol/l to 1000 mmol/l, in particular 50 mmol/l to 500 mmol/l, more particularly is 100 mmol/l.

If the separative chromatography colums is a IEX column, the concentration of buffer in the solution of molecules may 1 mmol/l to 1000 mmol/l, in particular 5 mmol/l to 50 mmol/l, more particularly is 10 mmol/l.

According to a very specific embodiment, the solution of molecules comprises 2.5 mol/l of ammonium acetate and 0.1 mol/l of phosphate buffer ($Na_2HPO_4$) buffered at pH of 7 (adjusted with phosphoric acid).

Step b) of the method of the present invention may be carried out by the separative chromatography column of the apparatus of the present invention.

The conditions of step b) depend on the separative chromatography column.

According to the embodiment wherein the separative chromatography column is a HIC column, then the volume of solution of molecules loaded onto the HIC column during step b) is 10 $\mu$l to 100 $\mu$l, in particular 20 $\mu$l to 75 $\mu$l, more particularly is 40 $\mu$l.

According to this embodiment, the flow rate is 10 $\mu$l/min to 500 $\mu$l/min, in particular 50 $\mu$l/min to 250 $\mu$l/min, more particularly is 100 $\mu$l/min.

According to this embodiment, the temperature of the HIC column is 10°C to 50°C, in particular 20°C to 50°C, more particularly 25°C to 35°C.

According to this embodiment, then an eluent (hereinafter referred to as the "separative eluent") may also be loaded onto the HIC column.

Typically, the separative eluent may comprise a HIC buffer salt selected from phosphate buffer, such as $Na_2HPO_4$ or $Na_2HPO_4$ and $NaH_2PO_4$

Typically the concentration of HIC buffer in the separative eluent may be 0.01 mol/l to 10 mol/l, in particular 0.05 mol/l to 1 mol/l, more particularly is 0.1 mol/l.

The HIC buffer that may be used in the separative eluent in accordance may be buffered to a pH of 4 to 10, more preferably of 5 to 9, most preferably of 6.5 to about 7.5.

Typically the pH of the HIC buffer that may be used in the separative eluent is adjusted with phosphoric acid, sodium hydroxide solution, potassium hydroxide, ammonia or mixture thereof.

According to a specific embodiment, the separative eluent comprises 0.1 mol/l of phosphate buffer ($Na_2HPO_4$ and $NaH_2PO_4$) buffered at pH of 7 (adjusted with sodium hydroxide solution).

Typically the ratio $R_v$ between the volume of solution of molecules and the volume of separative eluent loaded onto the HIC column during step b) may be constant or may vary, preferably the ratio may vary.

Typically the ratio $R_v$ varies according to the following sequence:

- for 10 to 60 minutes, in particular for 20 to 50 minutes, more particularly for 33 to 38 minutes, even more particularly for 36 minutes, 100% v/v to 10% v/v of the mixture and 0% v/v to 90% v/v of the separative eluent are loaded,
- for 10 to 60 minutes, in particular for 25 to 30 minutes, more particularly for 20 to 25 minutes, even more particularly for 21 minutes, 10% v/v to 0% v/v of the mixture and 90% v/v to 100% v/v of the separative eluent are loaded, and
- for 1 to 60 minutes, in particular for 3 to 30 minutes, more particularly for 5 to 15 minutes, even more particularly for 8 minutes, an isocratic step at 100% v/v of the separative eluent is loaded.

According to this specific embodiment, the flow rate is 10 $\mu$l/min to 1000 $\mu$l/min, in particular 50 $\mu$l/min to 500 $\mu$l/min, more particularly is 100 $\mu$l/min to 250 $\mu$l/min.

According to this specific embodiment, the temperature of the SEC column is 10°C to 50°C, in particular 20°C to 40°C, more particularly 20°C to 30°C.

Step d) of the method of the present invention may be carried out by the desalting chromatography column of the apparatus of the present invention.

According to an embodiment, step d) is carried out by also loading an eluent (hereinafter referred to as the "desalting eluent") onto the desalting chromatography column.

Typically, the desalting eluent may comprise a salt selected from potassium thiocyanate, sodium chloride, potassium chloride, ammonium chloride, sodium sulfate, potassium sulfate and ammonium sulfate, in particular the non-volatile salt is sodium chloride or ammonium acetate, more particularly the salt is ammonium acetate.

Typically the concentration of salt in the desalting eluent may be 10 mmol/l to 500 mmol/l, in particular 50 mmol/l to 250° mmol/l, more particularly is 100 mmol/l.

According to one specific embodiment, step d) is carried out in isocratic mode with the third solution, in particular with the desalting eluent comprising 100 mmol/l of ammonium acetate.

During step d) the flow rate of the desalting eluent and sample loaded onto the desalting chromatography column may be 1 $\mu$l/min to 1000 $\mu$l/min, in particular 250 $\mu$l/min to 900 $\mu$l/min, more particularly is 650 $\mu$l/min to 750 $\mu$l/min.

During step d) the temperature of the desalting chromatography column is 10°C to 150°C, in particular 15°C to 50°C, more particularly 20°C to 30°C.

The desalted sample recovered during step e) comprises the separated molecules and a mass spectrometer compatible salt.

Steps f) and g) of the method of the present invention may be carried out by the mass spectrometer **3** of the apparatus of the present invention.

Advantageously the method of the invention is particularly suited to the analysis of molecules such as proteins, in particular ADCs, monoclonal antibodies, therapeutic proteins, protein complexes such as protein/protein, protein/DNA, protein/RNA, protein/small molecule. Step g) of the method of the invention may then be used for elucidating the mass of proteins, in particular ADCs, monoclonal antibodies, therapeutic proteins and protein complexes such as protein/protein, protein/DNA, protein/RNA, protein/small molecule.

According to one embodiment, the mass spectrometer of steps f) and g) is coupled to an ion-mobility separator and an ion-mobility spectrometry is also performed during step g).

Advantageously, if the molecules to be characterized by the method of the present invention are proteins, in particular ADCs, the ion-mobility spectrometry performed during step g) enables the determination of the conformational homogeneity of proteins.

According to the embodiment wherein the separative chromatography column is a HIC column, the method of the present invention may further comprise, between steps c) and d), a step h1) of calculating the average DAR of ADCs in the sample recovered during step c).

The step h1) may be carried out through the detector **10** of the apparatus of the present invention, said detector **10** being a wavelength UV detector.

Since the separated molecules are recovered according to a specific sequence during step c) and are loaded during step d), recovered during step e) and loaded during step f) according to the same specific sequence, the method of the present invention may advantageously enable the easy and precise correlation between the mass or the conformational homogeneity of ADCs elucidated in step g) to the average DAR of ADCs determined in step h1) during a step h3).

According to the embodiment wherein the separative chromatography column is a SEC column, the method of the invention may further comprise, between steps c) and d), a step h2) of determining the molecular weight of the molecules in the sample recovered during step c).

This step h2) may be carried out through the detector **10** of the apparatus of the present invention, said detector **10** being a diode array detector.

Since the separated molecules are recovered according to a specific sequence during step c) and are loaded during step d), recovered during step e) and loaded during step f) according to the same specific sequence, the method of the present invention may advantageously enable the correlation between the mass of the molecules measured in step g) to the molecular weight of the molecules determined in step h2) during a step h3).

If the molecules to separate are proteins, in particular ADCs, the method of the present invention may enable the correlation between the primary structure or the conformational homogeneity of proteins elucidated in step g) to the molecular weight of the proteins determined in step h2).

The method of the present invention may further comprise a flow-regulating step i) between step c), h1) or h2) and step d).

This step i) may be carried out by the first valve **6**, the second valve **7** and the flow-regulating lines **8** and **9** of the apparatus of the present invention.

During step i), a first fraction of the sample recovered during step c) is diverted by the first valve **6** toward one flow-regulating line **8** to fill the volume of said flow-regulating line **8**. When the volume of this flow-regulating line **8** is full or after a predetermined time, the first fraction of the sample is diverted by the second valve **7** toward the desalting chromatography column of step d), and a second fraction of the sample is diverted by the first valve **6** toward another flow-regulating line **9** to fill the volume of said another flow-regulating line **9**. When the volume of this another flow-regulating line **9** is full or after a predetermined time, the second fraction of the sample is diverted by the second valve **7** toward the desalting chromatography column of step d). Step i) may be repeated as long as the sample is recovered during step c).

During step i), the loading of fractions of the sample onto the desalting chromatography column during step d) is advantageously regulated and thus the mixing of the each fractions of the sample into the desalting chromatography column during step e) is avoided, thereby avoiding also the mixing of the separated molecules comprised in said fractions into said desalting chromatography column during step e).

Moreover step i) allows recovering the separated molecules according to a specific sequence during step c) and then loading them during step d), recovering them during step e) and loading them during step f) according to the same specific sequence. Advantageously, step i) allows an easy and precise correlation between the results from step h1) or step h2) with the results from step g).

In particular for the study of ADCs, the primary structure or the conformational homogeneity of ADCs elucidated during step g) may be correlated with precision to the average DAR of ADCs determined during step h1).

According to one embodiment, the fractions of the flow-through sample are diverted from the flow-regulating lines **8** or **9** by the second valve **7** toward the desalting chromatography column to be loaded onto said desalting chromatography column during step d) after a predetermined time.

According to one specific embodiment, the predetermined time is from 10 seconds to 10 minutes, in particular from 30 seconds to 5 minutes, more particularly from 1 minute to 2 minutes.

The method of the present invention may further comprise, between step e) and step f), a step j) of detecting the chromatographic peaks characteristic of the molecular weight of the separated molecules and the separation salt recovered after step e), and determining the molecular weight of the molecules in the desalted sample recovered during step e).

This step j) may be carried out through the detector **20** of the apparatus of the present invention, said detector **20** being a second diode array detector.

Step j) may thus enable the detection of the separation between the separated molecules and the separation salt thereby insuring that only the separated molecules are loaded onto the mass spectrometer during step f).

The method of the present invention may further comprise an elimination step k) between steps e) or j) and step f).

This step k) may be carried out by the third valve **12** of the apparatus of the present invention.

During step k), the separated molecules are diverted towards the mass spectrometer of step f) while the separation salt are diverted to a dedicated recovering device **13**.

Step k) advantageously prevents the contamination of the mass spectrometer of step f) with the separation salt.

According to one embodiment, step k) is triggered by step j). Therefore steps j) and k) may thus advantageously protect the mass spectrometer of step f) by the separation salt.

According to an aspect of the invention, the method of the invention is carried out with the apparatus of the invention.

**Examples**

Example 1: Study of brentuximab vedotin (BV, Adcetris), reference cysteine-linked ADCs

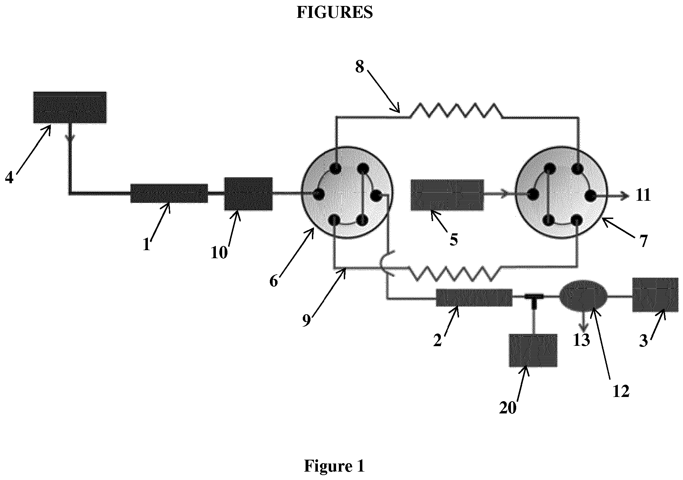

Brentuximab vedotin (BV), the reference cysteine linked ADC, was studied on the apparatus of the present invention illustrated on Figure 1.

**Experimental Section**

Reagents

All chemicals were purchased from Sigma-Aldrich : ammonium acetate (A1542), cesium iodide (21004), phosphoric acid (345245), 2-propanol (19516), sodium chloride (S7653), sodium phosphate monobasic (S8282), sodium phosphate dibasic (S7907).

All the aqueous solutions were prepared using an ultra-pure water system (Sartorius, Göttingen, Germany).

The brentuximab vedotin (BV) was purchased from Takeda.

Apparatus

The apparatus of the present invention consists in a combination of H-Class liquid chromatography system comprising a first housing **1** adapted to receive a HIC column and I-Class liquid chromatography system comprising a second housing **2** adapted to receive a SEC column. The H-Class liquid chromatography system is fluidly connected to the I-Class liquid chromatography system which is fluidly connected to a TWIMS-MS Synapt G2 HDMS mass spectrometer **3**, thus equipped with an ion-mobility separator and an ESI source. The systems and the mass spectrometer **3** are from Waters (Manchester, UK).

The apparatus includes a high-pressure quaternary solvent delivery pump **4**, an autosampler with a flow-through needle of 15 μL equipped with an extension loop of 50 μL (not represented).

The apparatus also includes a high-pressure binary solvent delivery pump **5**, a column manager composed of two independent column ovens (not represented), two 6-port high pressure two-position valves **6** and **7** and two flow-regulating lines **8** and **9** acting as interface between the HIC column and the SEC column.

A wavelength UV detector **10** and a diode array detector **20** both equipped with 500 nL flow-cell were used for the HIC and the SEC, respectively. The measured dwell volumes were 160 μL and 300 μL for the HIC and the SEC, respectively. It should be noted that the dwell volume of the SEC includes the volume of flow-regulating lines **8** and **9** used at the interface (*i.e.* 200 μL). Measured extra-column volumes were 12 μL and 17 μL for the HIC column and the SEC column, respectively. An external two position switching valve **12** (Vici Valco Instruments, Houston, USA) was also placed prior to the mass spectrometer **3**.

Data acquisition and instrument control were performed with MassLynx V4.1 software (Waters). HIC and SEC data from the wavelength UV detector **10** and the diode array detector **20** were exported to Matlab V7.12.0635 to construct 2D-contour plots via house-made calculation routines. MS data processing was done with MaxEnt, Masslynx 4.1.

Chromatographic conditions

The HIC column received in the first housing **1** was a MabPac HIC-10 (100 mm x 4.6 mm, 5 μm, 1000 Å) from Thermo Scientific, Cheshire, UK.

The SEC column employed in the second housing **2** was an AdvanceBio SEC (50 mm x 4.6 mm, 2.7 μm, 300 Å) from Agilent Technologies, Wilmington, DE, USA.

For the HIC, the solution to be analyzed was composed of 2.5 mol/l of ammonium acetate and 0.1 mol/l phosphate buffer ($Na_2HPO_4$), pH 7.0 (adjusted with phosphoric acid), while the separative eluent was composed of 0.1 M phosphate buffer ($Na_2HPO_4$ and $NaH_2PO_4$) with pH 7.0 (adjusted with sodium hydroxide solution). The following gradient was employed in HIC: 0 to 90% of the separative eluent in 36 min, 90 to 100% the separative eluent in 21 min, followed by an isocratic step at 100% the separative eluent for 8 min before re-equilibration during 25 minutes, for a total analysis time of 90 min. The HIC experiment was conducted at a flow-rate of 100 μL/min. Column temperature, wavelength and data acquisition rate were set at 30°C, 280 nm and 10 Hz respectively. The injection volume was 40 μL.

For the SEC, the separation was carried out in isocratic mode with a third aqueous solution composed of 100 mmol/l ammonium acetate at a flow-rate of 700 μL/min. Column temperature, wavelength and data acquisition rate were set at 25 °C, 210 / 280 nm and 40 Hz respectively. The analysis time of the SEC corresponds to the sampling time of the HIC, namely 1.5 min. Only 0.45 min (from 0.42 to 0.87 min) of the SEC was sent to the mass spectrometer 3 thanks to the switching valve **12**, to limit salt contamination of the ESI source. The flow-rate was divided by a factor 7 (i.e. 100 μL/min), prior to entering the mass spectrometer **3**, using a flow-splitter.

Non-denaturing mass spectrometry analysis conditions

The mass spectrometer **3** was operated in sensitive mode and positive polarity with a capillary voltage of 3.0 kV. To avoid disruption of weak non-covalent interactions, the sample cone and pressure in the interface region were set to 160 V and 6 mbar, respectively. Source and desolvation temperature were set to 100 and 450°C, respectively. Desolvation and cone gas flows were set at 750 and 60 L/Hr, respectively. Acquisitions were performed in the m/z range of 1000-10000 with a 1.5 s scan time. External calibration was performed using singly charged ions produced by a 2 g/L solution of cesium iodide in 2-propanol/water (50/50 v/v).

Ion mobility mass spectrometry conditions

For IM-MS analysis, the sample cone voltage was set to 100 V and the backing pressure of the source was 6 mbar. The Ar flow rate was 5 mL/min and the trap collision energy was set at 4 V in the traveling-wave-based ion trap. Ions were thermalized with a constant He flow rate of 130 mL/min before IM separation. The height and the velocity of the periodic waveform in the pressurized ion mobility cell were 40 V and 923 m/s, respectively. $N_2$ was used as drift gas (45 mL/min) providing a constant pressure of 2.75 mbar. Transfer collision energy was fixed to 2 V to extract the ions from the IM cell to the TOF analyzer. A calibration based on three different proteins (concanavaline A, pyruvate kinase and alcohol dehydrogenase) in non-denaturing conditions was used to perform collision cross section (CCS) calculation as previously described (refs. Salbo et al. Rapid Commun. Mass Spectrom. 2012, 26, 1181-1193, and Bush et al. Anal. Chem. 2010, 82, 9557-9565).

Average DAR calculation

Average DAR values were calculated from HIC data, by using Equation 1 below in which k is the number of drug loads.

$$\mathrm{DAR} = \frac{\left(\sum_{k=0}^{8} k * \mathrm{intensity\ DARk}\right)}{\sum_{k=0}^{8} \mathrm{intensity\ DARk}} \quad \textit{Equation 1}$$

**Results**

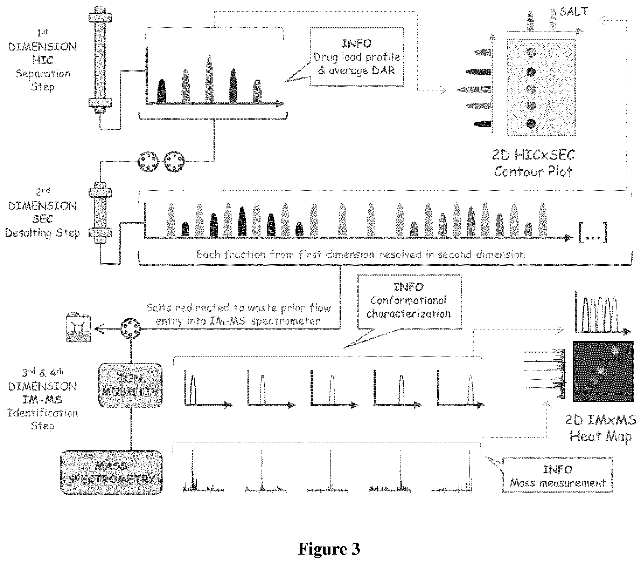

For the analysis of BV, the separation carried out by the HIC column in 80 min is represented in the top panel of Figure 3. The successive fractions of the HIC sample of 1.5 min sent to SEC column are delimited from by vertical lines. The separation from the SEC column is represented in the middle panel used as fast desalting of each fraction of the HIC sample. Ion mobility and mass-spectrometry in non-denaturing conditions are represented in the low panel.

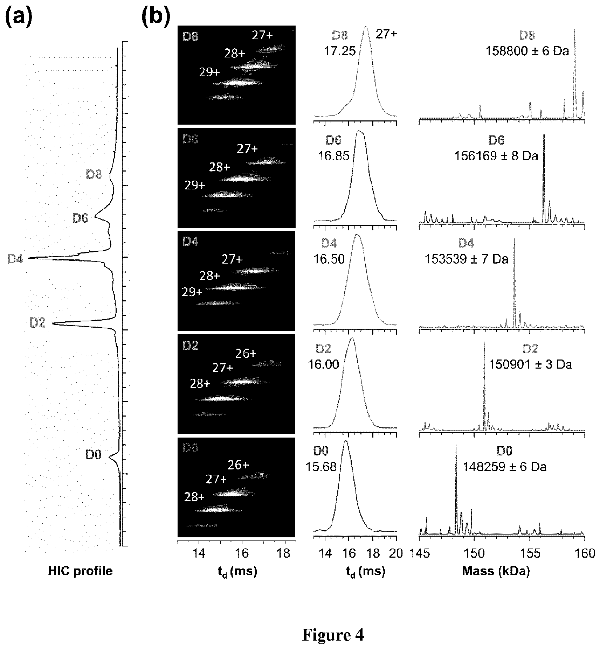

As illustrated on Figure 4a, five main peaks were detected after the [1]D-HIC separation of BV, which were all unambiguously identified by non-denaturing MS intact mass measurement (Figure 4b right panel and Table 1). All detected species could be identified as drug load species (D0 to D8), with a mass accuracy between 100-160 ppm, which is classical for intact ADC analysis in non-denaturing conditions on Q-TOF instruments and very good, considering the short acquisition time of only 0.45 min. Of note, even minor HIC species like D0 or D8 were clearly identified by non-denaturing MS. Therefore, average DAR determination is not anymore performed on the basis of species identification from HIC retention times, but on more accurate MS identification. For BV, an average DAR of 4.0 was unambiguously determined (Table 1), which is in agreement with expected values.

Table 1

| | DAR (G1F/G0F) | D0 | D1 | D2 | D3 | D4 | D5 | D6 | D7 | D8 | |
|---|---|---|---|---|---|---|---|---|---|---|---|
| | Theoretical mass (Da) | 148242 | 149559 | 150877 | 152195 | 153512 | 154830 | 156148 | 157465 | 158783 | |
| Non-stressed | Experimental mass (Da) | 148259 ± 6 | 149756 * Average mass | 150901 ± 3 | 152479 * Average mass | 153538 ± 7 | ND | 156169 ± 8 | ND | 158800 ± 6 | |
| | Mass accuracy (ppm) | 116 | - | 157 | - | 166 | - | 137 | - | 106 | |
| | $^{TW}CCS_{He}$ (nm$^2$) | 70.9 | - | 71.4 | - | 71.8 | - | 72.1 | - | 72.5 | |
| | Pred CCS$_{He}$ (nm$^2$) | 68.2 | - | 69.0 | - | 69.8 | - | 70.6 | - | 71.4 | |
| | HIC peak area (%) | 5.8 | 1.8 | 24.1 | 4.3 | 32.8 | - | 21.5 | - | 9.7 | Average DAR 4.0 |
| Stressed | Experimental mass (Da) | 148257 ± 7 | 149588 ± 5 | 150900 ± 5 | 152221 ± 25 | 153535 ± 40 | ND | 156167 ± 21 | ND | 158818 ± 17 | |
| | Mass accuracy (ppm) | 105 | 193 | 151 | 171 | 150 | - | 124 | - | 222 | |
| | $^{TW}CCS_{He}$ (nm$^2$) | 70.8 | 70.8 | 71.5 | 71.7 | 71.9 | - | 72.3 | - | 72.6 | |
| | Pred CCS$_{He}$ (nm$^2$) | 68.2 | 68.6 | 69.0 | 69.4 | 69.8 | - | 70.6 | - | 71.4 | |
| | HIC peak area (%) | 13.5 | 10.6 | 25.9 | 7.3 | 33.4 | - | 8.2 | - | 1.1 | Average DAR 2.8 |

Table 1 summarizes the experimental values for the different DARs of non-stressed and stressed ADC: molecular weights obtained from mass spectra, experimental collision cross section ($^{TW}CCS_{He}$), HIC peak area and average DAR calculation. Abbreviations are defined as ND for not detected. Experimental masses of DARs were compared to the theoretical ones. Experimental collision cross sections obtained from centroid IM drift times were compared with predicted CCS$_{He}$ calculated through the equation $CCS=2.435*M^{2/3}$ for spherical proteins.

To add an on-line additional dimension for conformational characterization, we next turned on the ion mobility of our MS, resulting in comprehensive 2D-IM-MS analysis of BV in non-denaturing conditions (Figure 4, left panel). Arrival time distributions (ATDs) of each individual species could be isolated in the IM cell, allowing conformational characterization through $^{TW}CCS_{N2}$ calculations of each HICxSEC separated drug load species (Figure 4b, middle panel). IM analyses led to the determination of the conformational homogeneity of each individual fractions of the HIC sample.

Figure 4b (left panel) presents the IMxMS contour plots of each individual HIC-detected species. A good agreement was obtained between $^{TW}CCS_{N2}$ values obtained by HICxSEC-IMxMS and those obtained by off-line injection of manually desalted BV (Table 1), demonstrating that the 2D-HICxSEC configuration does not affect BV global conformation.

These results demonstrate for the first time the ability to have a comprehensive analytical characterization of a cysteine-linked ADC within a single run, affording i) simultaneous drug load profile and quantitative average DAR assessment (HIC), ii) the unambiguous identification of the number of drug conjugations through accurate intact mass measurement (non-denaturing MS), along with iii) conformational homogeneity assessment of each drug load species (native IM).

Example 2: Thermally stressed samples

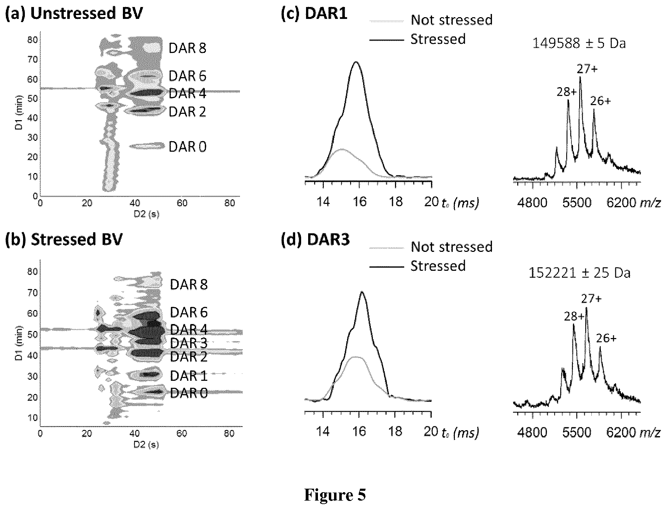

To highlight the possibilities and relevance of the apparatus and the method of the present invention involving chromatographic (HIC and SEC) and mass spectrometric methods, intact BV and temperature stressed BV were compared. A comparison of the HIC and SEC 2D plots of stressed and non-stressed BV is shown in Figures 5a and 5b, respectively.

The 2D-HICxSEC contour plots of stressed BV clearly highlight increase in peak intensities of DAR0 species along with species eluted at retention times which are intermediate between DAR0 and DAR2, and between DAR2 and DAR4, respectively. In addition, the intensities of the DAR6 and DAR8 peaks significantly decrease, while the DAR0 peak increases (Table 1 and comparison of Figures 5a and 5b) . The direct on-line coupling of non-denaturing MS to HICxSEC separation allowed first to accurately measure the molecular weights of all the compounds and to unambiguous identify DAR1 and DAR3 odd DARs as species formed upon thermal stress (Figures 5c and 5d). Thanks to MS identification of all the detected species, the average DAR calculated from the HIC chromatogram was reduced down to 2.8 in stressed conditions compared to 4.0 (Table 1), which is in agreement with previously published data (JCB 2016, 1032, 91-102). Simultaneously, on-line non-denaturing IM analysis allowed direct and unambiguous conformational characterization of odd DARs species (DAR1 and DAR3) through their $^{TW}CCS_{N2}$ calculations (Table 1).

Comparison of normalized extracted ATDs of unstressed versus stressed BV clearly highlights the intensity increase of odd DAR species in forced degradation conditions (Figures 5c and 5d).

These results provide a first proof-of-concept for using a comprehensive 4D HICxSEC-IMxMS methodology to assess the structure of hinge cysteine ADCs

## Claims

1. Method for in-depth characterization of molecules comprising the following steps:

   a) providing a solution of molecules;
   b) loading the solution onto a separative chromatography column;
   c) recovering a flow-through sample comprising separated molecules;
   d) loading the flow-through sample comprising separated molecules recovered during step c) onto a desalting chromatography column to carry out a chromatographic method under non-denaturing conditions,
   e) recovering a desalted flow-through sample comprising separated molecules;
   f) loading the desalted flow-through sample comprising separated molecules recovered during step e) onto a mass spectrometer,
   g) performing a non-denaturing mass spectrometry analysis to determine interacting stoichiometries and elucidating higher order structure of molecules,

   wherein the molecules are proteins, and
   wherein the separated molecules are recovered according to a specific sequence during step c) and are loaded during step d), recovered during step e) and loaded during step f) according to the same specific sequence.

2. The method according to claim 1, wherein the molecules are Antibody Drug Conjugates, monoclonal antibodies, therapeutic proteins or protein complexes.

3. The method according to claim 2, wherein the proteins are Antibody Drug Conjugates and the separative chromatography column is a hydrophobic interaction chromatography column, said method further comprises, between steps c) and d), the following step:
   h1) calculating the average Drug to Antibody Ratio of Antibody Drug Conjugates in the flow-through sample recovered during step c).

4. The method according to claim 1, wherein the separative chromatography column is a size exclusion chromatography column, said method further comprises, between steps c) and d), the following step:
   h2) determining the molecular weight of the molecules in the flow-through sample recovered during step c).

5. The method according to any of claims 1 to 4, said method further comprising, between steps e) and f), the following step:
   h) determining the molecular weight of the molecules in the desalted sample recovered during step e).

6. The method according to any of claims 1 to 5, said method further comprising, between step e) and step f), the following step:
   j) detecting the chromatographic peaks characteristic of the molecular weight of the separated molecules and the separation salt recovered after step e), and determining the molecular weight of the molecules in the desalted sample recovered during step e).

7. The method according to claims 3, 4 and 6, said method further comprising the following step:
h3) correlating the average Drug to Antibody Ratio of Antibody Drug Conjugates

calculated during step h1) with the mass or the conformational homogeneity of Antibody Drug Conjugates elucidated in step g), and/or
correlating the molecular weight of the molecules determined during step h2) with the mass of the molecules measured in step g), or
correlating the molecular weight of the molecules determined during step j) with the mass of the molecules measured in step g).

8. An apparatus adapted to carry out the method of claim 1, comprising:

- a first housing (1) having an inlet and an outlet and adapted to receive a separative chromatography column,
- a second housing (2) having an inlet and an outlet and adapted to receive a desalting chromatography column adapted to carry out a chromatographic method under non-denaturing conditions, and
- a mass spectrometer (3) having an inlet and an outlet,

wherein the inlet and the outlet of the first housing (1) are fluidly connected respectively to the inlet and the outlet of said separative chromatography column,

wherein the inlet and the outlet of the second housing (2) are fluidly connected respectively to the inlet and the outlet of said desalting chromatography column,
wherein the outlet of the first housing (1) is fluidly connected to the inlet of the second housing (2) and the outlet of the second housing (2) is fluidly connected to the inlet of the mass spectrometer (3).

9. The apparatus according to claim 8 further comprising a first valve (6) and a second valve (7), said first valve (6) comprising an inlet, a first outlet and a second outlet, and said second valve (7) comprising a first inlet, a second inlet and an outlet, wherein:

- the inlet of the first valve (6) is fluidly connected to the outlet of the first housing (1),
- the outlet of the second valve (7) is fluidly connected to the inlet of the second housing (2),
- the first outlet of the first valve (6) is fluidly connected to the first inlet of the second valve (7), and
- the second outlet of the first valve (6) is fluidly connected to the second inlet of the second valve (7).

10. The apparatus according to claim 9, wherein the first valve (6) and the second valve (7) are a multi-way valve, in particular a multi-way valve comprising 2 to 10 ways, more particularly a multi-way valve comprising 3, 4, 5, 6, 7, 8 and 9 ways.

11. The apparatus according to claim 8 further comprising a multi-way valve, such as multi-way valve comprising 8, 10 or 12 ways, said multi-way valve comprising a first inlet, a second inlet and a third inlet, a first outlet, a second outlet and a third outlet, wherein:

- the first inlet is fluidly connected to the outlet of the first housing (1),
- the first outlet is fluidly connected to the inlet of the second housing (2),
- the second inlet is fluidly connected to the second outlet, and
- the third inlet is fluidly connected to the third outlet.

12. The apparatus according to any of claims 9 to 10, wherein the apparatus further comprises a third valve (12) comprising one or more inlets and two or more outlets,
wherein one inlet of the third valve (12) is fluidly connected to the outlet of the second housing (2) and one outlet of the third valve (12) is fluidly connected to the inlet of the mass spectrometer (3).

13. The apparatus according to any of claims 8 to 12, said apparatus further comprising a detector (10, 20) at the outlet of the first housing (1) and/or at the outlet of the second housing (2).

14. The apparatus according to claim 13, wherein the detector (10, 20) is a wavelength UV detector, a diode array UV detector or fluorescence detector.

**Patentansprüche**

1. Verfahren zur Tiefencharakterisierung von Molekülen, das die folgenden Schritte umfasst:

   a) Bereitstellen einer Lösung von Molekülen;
   b) Laden der Lösung auf eine Chromatographie-Trennsäule;
   c) Gewinnung einer Durchflussprobe, die abgetrennte Moleküle umfasst;
   d) Laden der Durchflussprobe, die abgetrennte Moleküle umfasst, die während Schritt c) gewonnen wurden, auf eine Entsalzungschromatographiesäule, um ein chromatographisches Verfahren unter nicht-denaturierenden Bedingungen durchzuführen,
   e) Gewinnen einer entsalzten Durchflussprobe, die abgetrennte Moleküle umfasst;
   f) Laden der entsalzten Durchflussprobe, die abgetrennte Moleküle umfasst, die während Schritt e) gewonnen wurden, auf ein Massenspektrometer,
   g) Durchführen einer nicht-denaturierenden Massenspektrometrieanalyse zur Bestimmung von Wechselwirkungsstöchiometrien und zur Klärung der Struktur höherer Ordnung von Molekülen,

   wobei die Moleküle Proteine sind, und
   wobei die abgetrennten Moleküle gemäß einer spezifischen Sequenz während Schritt c) gewonnen werden und während Schritt d) geladen werden, während Schritt e) gewonnen werden und während Schritt f) gemäß derselben spezifischen Sequenz geladen werden.

2. Verfahren nach Anspruch 1, wobei die Moleküle Antikörper-Wirkstoff-Konjugate, monoklonale Antikörper, therapeutische Proteine oder Proteinkomplexe sind.

3. Verfahren nach Anspruch 2, wobei es sich bei den Proteinen um Antikörper-Wirkstoff-Konjugate handelt und die Chromatographie-Trennsäule eine Chromatographiesäule mit hydrophober Wechselwirkung ist, wobei das Verfahren ferner zwischen Schritten c) und d) den folgenden Schritt umfasst:
   h1) Berechnen des durchschnittlichen Verhältnisses von Antikörper-Wirkstoff-Konjugaten zu Wirkstoff in der in Schritt c) gewonnenen Durchflussprobe.

4. Verfahren nach Anspruch 1, wobei die Chromatographie-Trennsäule eine Größenausschluss-Chromatographiesäule ist, wobei das Verfahren ferner zwischen den Schritten c) und d) den folgenden Schritt umfasst:
   h2) Bestimmung des Molekulargewichts der Moleküle in der in Schritt c) gewonnenen Durchflussprobe.

5. Verfahren nach einem der Ansprüche 1 bis 4, wobei das Verfahren ferner zwischen den Schritten e) und f) den folgenden Schritt umfasst:
   h) Bestimmung des Molekulargewichts der Moleküle in der entsalzten Probe, die während des Schritts e) gewonnen wurde.

6. Verfahren nach einem der Ansprüche 1 bis 5, wobei das Verfahren ferner zwischen Schritt e) und Schritt f) den folgenden Schritt umfasst:
   j) Nachweisen der für das Molekulargewicht der abgetrennten Moleküle charakteristischen chromatographischen Peaks und des nach Schritt e) gewonnenen Trennsalzes und Bestimmung des Molekulargewichts der Moleküle in der während Schritt e) gewonnenen entsalzten Probe.

7. Verfahren nach einem der Ansprüche 3, 4 und 6, wobei das Verfahren ferner den folgenden Schritt umfasst:
   h3) Korrelieren des in Schritt h1) berechneten durchschnittlichen Verhältnisses

   von Wirkstoff zu Antikörper der Antikörper-Wirkstoff-Konjugate mit der Masse oder der Konformationshomogenität der Antikörper-Wirkstoff-Konjugate, die in Schritt g) bestimmt wurden, und/oder
   Korrelieren des in Schritt h2) bestimmten Molekulargewichts der Moleküle mit der in Schritt g) gemessenen Masse der Moleküle, oder
   Korrelieren des in Schritt j) bestimmten Molekulargewichts der Moleküle mit der in Schritt g) gemessenen Masse der Moleküle.

8. Vorrichtung, die zur Durchführung des Verfahrens nach Anspruch 1 geeignet ist, umfassend:

   - ein erstes Gehäuse (1), das einen Einlass und einen Auslass aufweist, das zur Aufnahme einer Chromatographie-Trennsäule geeignet ist,

- ein zweites Gehäuse (2), das einen Einlass und einen Auslass aufweist, das zur Aufnahme einer Entsalzungschromatographiesäule geeignet ist, die zur Durchführung eines chromatographischen Verfahrens unter nichtdenaturierenden Bedingungen geeignet ist, und
- ein Massenspektrometer (3), das einen Einlass und einen Auslass aufweist, wobei der Einlass und der Auslass des ersten Gehäuses (1) mit dem Einlass bzw. dem Auslass der Chromatographie-Trennsäule in Fluidverbindung stehen,

wobei der Einlass bzw. der Auslass des zweiten Gehäuses (2) in Fluidverbindung mit dem Einlass und dem Auslass der Entsalzungschromatographiesäule stehen,
wobei der Auslass des ersten Gehäuses (1) mit dem Einlass des zweiten Gehäuses (2) und der Auslass des zweiten Gehäuses (2) mit dem Einlass des Massenspektrometers (3) in Strömungsverbindung steht.

9. Vorrichtung nach Anspruch 8, ferner umfassend ein erstes Ventil (6) und ein zweites Ventil (7), wobei das erste Ventil (6) einen Einlass, einen ersten Auslass und einen zweiten Auslass umfasst, und das zweite Ventil (7) einen ersten Einlass, einen zweiten Einlass und einen Auslass umfasst, wobei:

- der Einlass des ersten Ventils (6) mit dem Auslass des ersten Gehäuses (1) in Fluidverbindung steht,
- der Auslass des zweiten Ventils (7) in Fluidverbindung mit dem Einlass des zweiten Gehäuses (2) steht,
- der erste Auslass des ersten Ventils (6) mit dem ersten Einlass des zweiten Ventils (7) strömungstechnisch verbunden ist, und
- der zweite Auslass des ersten Ventils (6) strömungstechnisch mit dem zweiten Einlass des zweiten Ventils (7) verbunden ist.

10. Vorrichtung nach Anspruch 9, wobei das erste Ventil (6) und das zweite Ventil (7) ein Mehrwegeventil sind, insbesondere ein Mehrwegeventil umfassend 2 bis 10 Wege, mehr bevorzugt ein Mehrwegeventil umfassend 3, 4, 5, 6, 7, 8 und 9 Wege.

11. Vorrichtung nach Anspruch 8, ferner umfassend ein Mehrwegeventil, wie beispielsweise ein Mehrwegeventil umfassend 8, 10 oder 12 Wege, wobei das Mehrwegeventil einen ersten Einlass, einen zweiten Einlass und einen dritten Einlass, einen ersten Auslass, einen zweiten Auslass und einen dritten Auslass umfasst, wobei:

- der erste Einlass strömungstechnisch mit dem Auslass des ersten Gehäuses (1) verbunden ist,
- der erste Auslass strömungstechnisch mit dem Einlass des zweiten Gehäuses (2) verbunden ist,
- der zweite Einlass strömungstechnisch mit dem zweiten Auslass verbunden ist, und
- der dritte Einlass strömungstechnisch mit dem dritten Auslass verbunden ist.

12. Vorrichtung nach einem der Ansprüche 9 bis 10, wobei die Vorrichtung ferner ein drittes Ventil (12) umfasst, das einen oder mehrere Einlässe und zwei oder mehrere Auslässe umfasst, wobei ein Einlass des dritten Ventils (12) mit dem Auslass des zweiten Gehäuses (2) und ein Auslass des dritten Ventils (12) mit dem Einlass des Massenspektrometers (3) in Fluidverbindung steht.

13. Vorrichtung nach einem der Ansprüche 8 bis 12, wobei die Vorrichtung ferner einen Detektor (10, 20) an dem Auslass des ersten Gehäuses (1) und/oder an dem Auslass des zweiten Gehäuses (2) umfasst.

14. Vorrichtung nach Anspruch 13, wobei der Detektor (10, 20) ein UV-Wellenlängendetektor, ein UV-Diodenarray-Detektor oder Fluoreszenzdetektor ist.

**Revendications**

1. Procédé de caractérisation approfondie de molécules comprenant les étapes suivantes :

a) la fourniture d'une solution de molécules ;
b) le chargement de la solution sur une colonne de chromatographie de séparation ;
c) la récupération d'un échantillon d'écoulement traversant comprenant des molécules séparées ;
d) le chargement de l'échantillon d'écoulement traversant comprenant les molécules séparées récupérées pendant l'étape c) sur une colonne de chromatographie de dessalage pour mettre en œuvre un procédé chromatographique dans des conditions non dénaturantes,

e) la récupération d'un échantillon d'écoulement traversant dessalé comprenant des molécules séparées ;

f) le chargement de l'échantillon d'écoulement traversant dessalé comprenant les molécules séparées récupérées pendant l'étape e) sur un spectromètre de masse,

g) la réalisation d'une analyse par spectrométrie de masse non dénaturante afin de déterminer les stœchiométries d'interaction et d'élucider la structure d'ordre supérieur des molécules,

dans lequel les molécules sont des protéines, et

dans lequel les molécules séparées sont récupérées selon une séquence spécifique pendant l'étape c) et sont chargées pendant l'étape d), récupérées pendant l'étape e) et chargées pendant l'étape f) selon la même séquence spécifique.

2. Procédé selon la revendication 1, dans lequel les molécules sont des conjugués anticorps-médicament, des anticorps monoclonaux, des protéines thérapeutiques ou des complexes protéiques.

3. Procédé selon la revendication 2, dans lequel les protéines sont des conjugués anticorps-médicament et la colonne de chromatographie de séparation est une colonne de chromatographie à interaction hydrophobe, ledit procédé comprenant en outre, entre les étapes c) et d), l'étape suivante :

h1) le calcul du rapport moyen entre le médicament et l'anticorps des conjugués anticorps-médicament dans l'échantillon d'écoulement traversant récupéré pendant l'étape c).

4. Procédé selon la revendication 1, dans lequel la colonne de chromatographie de séparation est une colonne de chromatographie à exclusion de taille, ledit procédé comprend en outre, entre les étapes c) et d), l'étape suivante :

h2) la détermination de la masse moléculaire des molécules dans l'échantillon d'écoulement traversant récupéré pendant l'étape c).

5. Procédé selon l'une quelconque des revendications 1 à 4, ledit procédé comprenant en outre, entre les étapes e) et f), l'étape suivante :

h) la détermination de la masse moléculaire des molécules dans l'échantillon dessalé récupéré pendant l'étape e).

6. Procédé selon l'une quelconque des revendications 1 à 5, ledit procédé comprenant en outre, entre l'étape e) et l'étape f), l'étape suivante :

j) la détection des pics chromatographiques caractéristiques de la masse moléculaire des molécules séparées et du sel de séparation récupéré après l'étape e), et la détermination de la masse moléculaire des molécules dans l'échantillon dessalé récupéré pendant l'étape e).

7. Procédé selon les revendications 3, 4 et 6, ledit procédé comprenant en outre l'étape suivante :

h3) la corrélation du rapport moyen entre le médicament et l'anticorps des conjugués anticorps-médicament calculé pendant l'étape h1) avec la masse ou l'homogénéité de conformation des conjugués anticorps-médicament élucidés à l'étape g), et/ou

la corrélation de la masse moléculaire des molécules déterminée pendant l'étape h2) avec la masse des molécules mesurée à l'étape g), ou

la corrélation de la masse moléculaire des molécules déterminée pendant l'étape j) avec la masse des molécules mesurée à l'étape g).

8. Appareil adapté pour mettre en œuvre le procédé selon la revendication 1, comprenant :

- un premier boîtier (1) ayant une entrée et une sortie et adapté pour recevoir une colonne de chromatographie de séparation,

- un second boîtier (2) ayant une entrée et une sortie et adapté pour recevoir une colonne de chromatographie de dessalage adaptée pour mettre en œuvre un procédé chromatographique dans des conditions non dénaturantes, et

- un spectromètre de masse (3) ayant une entrée et une sortie,

dans lequel l'entrée et la sortie du premier boîtier (1) sont reliées de manière fluidique respectivement à l'entrée et à la sortie de ladite colonne de chromatographie de séparation,

dans lequel l'entrée et la sortie du second boîtier (2) sont reliées de manière fluidique respectivement à l'entrée et à la sortie de ladite colonne chromatographique de dessalage,

dans lequel la sortie du premier boîtier (1) est reliée de manière fluidique à l'entrée du second boîtier (2) et la sortie du second boîtier (2) est reliée de manière fluidique à l'entrée du spectromètre de masse (3).

9. Appareil selon la revendication 8 comprenant en outre une première vanne (6) et une deuxième vanne (7), ladite première vanne (6) comprenant une entrée, une première sortie et une deuxième sortie, et ladite deuxième vanne (7) comprenant une première entrée, une deuxième entrée et une sortie, dans lequel :

- l'entrée de la première vanne (6) est reliée de manière fluidique à la sortie du premier boîtier (1),
- la sortie de la deuxième vanne (7) est reliée de manière fluidique à l'entrée du second boîtier (2),
- la première sortie de la première vanne (6) est reliée de manière fluidique à la première entrée de la deuxième vanne (7), et
- la deuxième sortie de la première vanne (6) est reliée de manière fluidique à la deuxième entrée de la deuxième vanne (7).

10. Appareil selon la revendication 9, dans lequel la première vanne (6) et la deuxième vanne (7) sont une vanne à plusieurs voies, en particulier une vanne à plusieurs voies comprenant 2 à 10 voies, plus particulièrement une vanne à plusieurs voies comprenant 3, 4, 5, 6, 7, 8 et 9 voies.

11. Appareil selon la revendication 8 comprenant en outre une vanne à plusieurs voies, telle qu'une vanne à plusieurs voies comprenant 8, 10 ou 12 voies, ladite vanne à plusieurs voies comprenant une première entrée, une deuxième entrée et une troisième entrée, une première sortie, une deuxième sortie et une troisième sortie, dans lequel :

- la première entrée est reliée de manière fluidique à la sortie du premier boîtier (1),
- la première sortie est reliée de manière fluidique à l'entrée du second boîtier (2),
- la deuxième entrée est reliée de manière fluidique à la deuxième sortie, et
- la troisième entrée est reliée de manière fluidique à la troisième sortie.

12. Appareil selon l'une quelconque des revendications 9 à 10, dans lequel l'appareil comprend en outre une troisième vanne (12) comprenant une ou plusieurs entrées et deux sorties ou plus,

dans lequel une entrée de la troisième vanne (12) est reliée de manière fluidique à la sortie du second boîtier (2) et une sortie de la troisième vanne (12) est reliée de manière fluidique à l'entrée du spectromètre de masse (3).

13. Appareil selon l'une quelconque des revendications 8 à 12, ledit appareil comprenant en outre un détecteur (10, 20) à la sortie du premier boîtier (1) et/ou à la sortie du second boîtier (2).

14. Appareil selon la revendication 13, dans lequel le détecteur (10, 20) est un détecteur UV à longueur d'onde, un détecteur UV à réseau de diodes ou un détecteur de fluorescence.

**FIGURES**

**Figure 1**

**Figure 2**

**Figure 3**

Figure 4

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MORGAN SARRUT et al.** Analysis of antibody-drug conjugates by comprehensive on-line two-dimensional hydrophobic interaction chromatography x reversed phase liquid chromatography hyphenated to high resolution mass spectrometry. I - Optimization of separation conditions. *JOURNAL OF CHROMATOGRAPHY B: BIOMEDICAL SCIENCES & APPLICATIONS,* 28 June 2016, vol. 1032, 103-111

- **SALBO et al.** *Rapid Commun. Mass Spectrom.,* 2012, vol. 26, 1181-1193
- **BUSH et al.** *Anal. Chem.,* 2010, vol. 82, 9557-9565
- *JCB,* 2016, vol. 1032, 91-102